# EUROPEAN PATENT APPLICATION

(11) **EP 1 090 743 A2**
(43) Date of publication of application: **11.04.2001**
(21) Application number: 00306834.3
(22) Date of filing: 10.08.2000
(51) Int. Cl.: B32B 1/08, F16L 11/12

(54) **Electrochemical degradation-resistant coolant hose**

(30) Priority: 10.08.1999 US 147991 P; 16.05.2000 US 572552
(71) Applicant: Avon Property Management Co., Cadillac, Michigan 49601 (US)
(72) Inventor: Jant, Keith H., Cadillac, Michigan 49601 (US)
(74) Representative: Calderbank, Thomas Roger

(57) **Abstract**

An automobile cooling system for an internal combustion engine with a radiator has coolant hoses connected to the radiator and adapted to be connected to an automobile engine to cool the same. The coolant hoses are constructed with an innermost layer of a thermoplastic elastomer which resists electrochemical degradation, an optional tie layer of a thermoset material surrounding the innermost layer, a reinforcement layer surrounding the optional tie layer, and a cover made of a thermoset material surrounding the reinforcement layer.

## Description

The invention relates to automotive radiator hoses. In one of its aspects, the invention relates to an electrochemical degradation-resistant coolant hose for an automotive coolant system. In another of its aspects, the invention relates to an automotive engine cooling system having an electrochemical degradation-resistant coolant hose.

Engine coolant hoses in the automotive industry have been known to deteriorate over time. The root cause of coolant hose failure is thought to be an electrochemical process occurring in the hose. The electrochemical cell that causes the hose failure comprises the cooling system itself. Oxidation takes place at the anode formed by the metal of the engine block and the bonded metal components of the cooling system. The coolant (glycol/water) acts as the electrolyte, which provides an ionic path for electrons. Reduction takes place at the cathode created by the existence of the rubber hose, more particularly an EPDM rubber hose.

Initial damage, referred to as striations, propagate into cracks under dynamic conditions set up by vehicle operation. The striations and cracks allow coolant to reach the reinforcement fiber and cause hose leakage and eventual rupture. The most severe damage is normally found at the air/fluid interface of the hose. This is consistent with the observation that the upper radiator hose, which is most likely to contain air when the vehicle is not running, is the part that usually has the most damage.

The presence of carbon black in the radiator hose material has been shown to increase current carried by the coolant, with the current rapidly increasing as the carbon black loading is increased. In addition, as the degradation of the thermoset hose progresses, the current flow increases. Accordingly, as the current increases, the rubber hose, acting as a cathode, increases in weight as it deteriorates and absorbs fluid. For example, in one series of tests, fluid absorption in EPDM rubber was shown to be positively related to an increase in voltage. The major absorption at the cathode was attributed to the reduction of s-s links in the cathodic polymer. Also, increased diene concentration in the rubber has been shown to be positively related to the amount of fluid absorption in the rubber material.

Sulfur cured hose materials are also associated with increased current in the system, and thus high coolant absorption, when compared with peroxide cured hose materials, and master batch (no curatives used) hose materials. Furthermore, the amount of curing applied to the sulfur cured materials affects cracking of the hose and resultant coolant absorption by the hose. In tightly cured materials, less coolant absorption is observed than in materials with lower crosslinking density, even when the same amounts of current exist in the compared systems. Accordingly, in tightly cured materials, crack formation and hence coolant absorption occur less readily than in loosely cured systems.

According to the invention, an automobile cooling system for an internal combustion engine with a radiator has coolant hoses connected to the radiator and adapted to be connected to an automobile engine to cool the same wherein the coolant hoses are constructed with an innermost layer of a thermoplastic elastomer which resists electrochemical degradation. The electrochemical degradation resistant engine coolant hose according to the invention has an innermost layer made of a thermoplastic elastomer, an optional tie layer of a thermoset material surrounding the innermost layer, a reinforcement layer surrounding the optional tie layer, and a cover made of a thermoset material surrounding the reinforcement layer.

The thermoplastic elastomer which' forms the innermost layer is selected from the group consisting of styrene block copolymers, elastomeric alloys other than melt-processible rubbers, polyolefinic blends, polyurethanes, copolyesters, and polyamides having soft segments of at least one of an aliphatic polyether or polyester.

A thermoplastic elastomer (TPE) is a material with the functional properties and performance of a conventional thermoset rubber, but the processing characteristics of a thermoplastic. A TPE has two or more intermingled polymer systems, each with its own phase and softening temperature (Ts). In the useful temperature range one phase (the soft or elastomeric phase) will be above its Ts and the other phase (the hard phase) will be below its Ts. The hard phase thus anchors or restricts the movement of the polymer chains of the soft phase, with a resistance to deformation resulting.

There are six generic classes of thermoplastic elastomers: **1)** styrene block copolymers, **2)** polyolefinic blends, **3)** elastomeric alloys, **4)** polyurethanes, **5)** copolyesters, and **6)** polyamides.

Styrenic TPEs are block copolymers of styrene with a diene such as butadiene or isoprene or with an olefin pair such as ethylenepropylene or ethylene-butylene. The hard phase is an aggregate of polystyrene blocks, and the soft or elastomer phase is an aggregate of rubberlike polydiene or olefin pair blocks. Examples of such materials are Kraton and Cariflex from Shell Chemical Co. and Solprene from Phillips Petroleum Company.

Polyolefin TPEs are composed of two polymer systems, each with its own phase. The harder of these polymers is a polyolefin- commonly PP or PE. The softer of these polymers is an elastomer-most often ethylene-propylene rubber with little or no crosslinking. The continuous phase normally is that of the polymer present in greatest amount. Olefinic TPEs based on EPDM rubber have very good resistance to ozone and oxidative attack in air. Examples of Polyolefin TPEs are Keltan and Kelburon from DSM and Vestopren from Huls.

Elastomeric alloy TPEs may have one or more phases. Thermoplastic vulcanizate (TPV) elastomeric alloys consist of a finely divided dispersion of highly vulcanized elastomer (such as EPDM or NBR) in a matrix of polyolefin. The degree of vulcanization and fineness of dispersion are of basic importance to the properties of the TPV. The compatibility of the rubber and plastic phases will determine the degree to which a compatibilizer is needed to stabilize the dispersion. Examples of Elastomeric alloy TPEs include AES Santoprene, DSM Sarlink and AES Geolast.

A second type of elastomeric alloy is melt processible rubbers (MPRs). These TPEs are said to consist of a plasticized chlorinated polyolefin blend often with significant carbon black content. However, these elastomeric alloys are not useful in the invention and are not included in the group of TPEs that are used in the inner layer of the coolant hose according to the invention. High levels of carbon black or sulfur are believed to have a deleterious effect on the degradation performance of the coolant hose according to the invention.

Thermoplastic polyurethanes (TPUs) are block, copolymers with soft and hard blocks. They are prepared by the melt polymerization of a low molecular-weight glycol with a diisocyanate and a macroglycol (MW **1000** to **2000**). The soft segments consist of the macroglycol which may be an aliphatic polyester or polyether. The hard segments result from the reaction of the glycol with diisocyanate, which also binds them to the soft segments.

Copolyester TPEs are block copolymers composed of alternating hard and soft segments. The hard segments consist of polyalkylene terephthalate and the soft segment of a polyalkylene ether. The alkylene group is commonly 1,4-butylene. The linkages in the hard segments are ester, those in the soft segments being ether. An example of a Copolyester TPE is Dupont Hytrel.

Polyamide TPEs are either a polyether block polyamide or a polyester block polyamid. The hard segments are polyamides and the soft segments either an aliphatic polyether or polyester. Examples of Polyamide TPEs are Grilamid by EMS Chemie and Estamid by Dupont-Dow.

The preferred thermoplastic elastomers are melt processable thermoplastic olefins, and elastomeric alloys and, most preferably, thermoplastic vulcanizates. Santoprene and Sarlink are preferred thermoplastic vulcanizates. These vulcanates are dynamically vulcanized alloys containing vulcanized thermoset polymers and a continuous thermoplastic matrix. They are disclosed in Coran, "TPE'S FROM RUBBER-PLASTIC BLENDS, U.S. Patents 3,758,643, 4,130,535 and 4,355,139. The Santoprene and Sarlink thermoplastic elastomers utilize an ethylene propylene diene monomer (EPDM) as the vulcanized thermoset polymer and polypropylene as the continuous thermoplastic matrix. In any case, the inner layer is essentially an insulator, preferably without conductive fillers such as carbon black or cross-linking agents such as sulfur, and is melt processable so that it can be extruded, and preferably co-extruded with the tie layer and the cover or outer layer. To the extent that the thermoplastic vulcanizates have carbon black in the thermoset component, the percentage of carbon black is desirably less than 20 weight % based on the weight of the thermoset component in the thermoplastic vulcanizate. Further, to the extent that carbon black is used in the thermoplastic elastomer, it is preferred that the carbon black be non-conductive. The preferred thermoplastic elastomers will have a hardness in the range of 45 shore A to 55 shore D and are exemplified by Sarlink 4155B, 4165B, 4175B, 4180B, 4190B, 4193DB or 4149DB and Santoprene 101-55, 101-64, 101-73, 101-80, 101-87, 103-40, 103-50, Santoprene 201-55, 201-64, 201-73, 201-80, 201-87, 203-40 or 203-50.

The thickness of the inner layer can vary over a wide range, but generally will fall into the range of 0.003" to 0.065", preferably in the range of 0.010" to 0.040". In a preferred form of the invention, the inner layer is made from a Santoprene 201-73 with a thickness of 0.025".

The inner layer is generally formed by extruding the layer as a tube. Other methods of forming the inner layer include longitudinal or spirally wrapped calendar stock, spraying or molding.

The composition of the tie layer is selected to promote bonding to the inner layer, a reinforcement layer, and cover or outer layer. The composition of the thermoset tie layer can be selected from a wide variety of commercially available polymers, including natural rubber, synthetic isoprene, styrene butadiene rubbers, butyl, halobutyl, ethylene propylene diene monomer (EPDM), crosslinked polyethylene, neoprenes, hypalon, polychloroprene, Silicone rubber, fluorocarbon rubbers, epichlorohydrin, Vamac (EEA), polyacrylate, flouorsilicone, chlorosulfonated polyethylene and chlorinated polyethylene among others. The preferable material is a commercial grade EPDM formulated to provide the physical, as well as, environmental properties required by the application. A preferred blend contains 10% to 80% polymer, 10% to 70% reinforcing and/or non-reinforcing filler, and 0.3% to 15% of a vulcanizing agent. Additional modifiers can be included in the formulation to enhance the processing and/or environmental properties of the thermoset compound, but are not critical. These modifiers include such materials as processing aids, accelerators, accelerator activators, adhesion promoters and age resistors.

The thickness of the tie layer can vary over a wide range, but generally will fall into the range of 0.00" to 0.100", preferably in the range of 0.040" to 0.080". In a preferred form of the invention, the inner layer is made from an EPDM with a thickness of about 0.065".

The tie layer is generally applied to the inner layer by extrusion. However, other methods for applying the tie layer include longitudinal or spiral application of calendar stock, spraying or coating with viscous cement or molding

The reinforcing layer interposed between the tie layer and the cover is formed from, though not restricted to, synthetic fibers or metallic wires which can be braided, knit or spirally wound. Typical examples of synthetic fibers are vinylon fibers obtainable from Unitica, polyester fibers such as polyethylene terephthalate fibers available as Tetron from Toray, nylon fibers such as nylon 6 and nylon 66 as Leona from Ashi Chemical, rayon fibers, aromatic polyamide fibers and cotton fibers. Included metallic wires are steel wires, brass-plated to improve rust inhibition and adhesion strength. These materials may be utilized as multiply strands, fabric or combined in any manner to provide the necessary reinforcement to meet the demands of a specific application. One or more reinforcement layers can be used in the laminates according to the invention. Furthermore, multiple types of reinforcement material can be in a single laminate.

The composition of the cover or outer layer, like the tie layer, can be selected from a wide variety of commercially available thermoset polymers, including natural rubber, synthetic isoprene, styrene butadiene rubbers, butyl, halobutyl, ethylene propylene diene monomer (EPDM), crosslinked polyethylene, neoprenes, hypalon, polychloroprene, silicone rubber, fluorocarbon rubbers, epichlorohydrin, Vamac (EEA), polyacrylate, flouorsilicone, chlorosulfonated polyethylene and chlorinated polyethylene and polychloroprene, among others. The preferable material is a commercial grade EPDM formulated to provide the physical, as well as, environmental properties required by the application. A preferred blend contains 10% to 80% polymer, 10% to 70% reinforcing and/or non-reinforcing filler, and 0.3% to 15% of a vulcanizing agent. Additional modifiers can be included in the formulation to enhance the processing and/or environmental properties of the thermoset compound, but arc not critical. These modifiers include such materials as processing aids, accelerators, accelerator activators, adhesion promoters and age resistors. The polymer composition of the cover or outer layer can be the same as or different than the tie layer.

The thermoset materials forming the tie layer and the cover or outer layer can include carbon black as a filler or reinforcing agent and sulfur as a vulcanizing agent. Other fillers such as clays, silicas, calcium carbonate and combinations thereof can be utilized. Other vulcanizing agents such as sulfur bearing accelerators, peroxides, metallic oxides or combinations thereof can also be used in these compositions according to the invention.

The cover or outer layer is preferably formed by cross head or co-extrusion over the tie layer after the tie layer and the reinforcement have been applied to the inner layer.

The composite tube formed according to the invention can be bent into a desired shape and vulcanized or it can be vulcanized without bending to form a coolant hose.

The thickness of the cover or outer layer can vary over a wide range, but generally will fall into the range of 0.020" to 0.100", preferably in the range of 0.040 to 0.080." In a preferred form of the invention, the inner layer is made from an EPDM with a thickness of about 0.065".

The coolant hose according to invention resists electrochemical degradation and also maintains flexibility over long periods of time while subjected to an environment of automotive coolant and an electrochemical cell. The preferred method of making a coolant hose according to the invention is to extrude the inner layer, co-extrude or cross-head extrude the tie layer, apply the reinforcing layer and cross-head extrude the cover or outer layer. The extruded tubing is then cut to length, shaped on a mandrel, and vulcanized to set the lengths of tubing into the shape, thereby forming the coolant hose. The hose can then be trimmed to length, if necessary.

In the drawings:

The invention will now be described with reference to the drawings, in which:
FIG. 1 is a schematic cross sectional view of a coolant hose according to the invention; and
FIGS. 2-13 are photomicrographs of magnified sections of coolant hose made in accordance with Example 1;
FIG. 14 is graph of current logged during the test period for the coolant hose in accordance with Example 1;
FIGS. 15 to 18 are photomicrographs of the surface of the samples of coolant hose made according to the invention taken at 6.3X magnification; and
FIG 19 is a graph of current logged during the test period for the coolant hose made in accordance with Example 2.

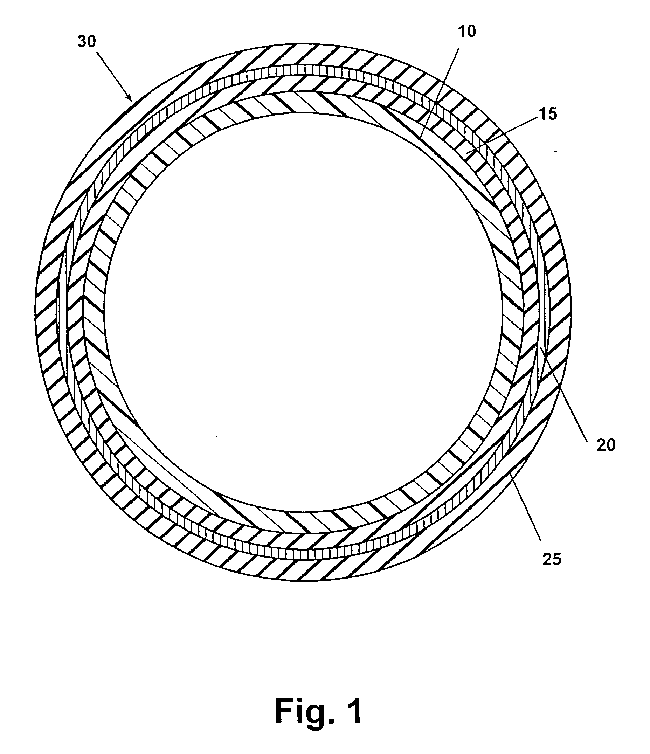

Referring to FIG. 1, an electrochemical degradation (ECD)-resistant coolant hose 30 according to the present invention has an innermost layer 10 made of a thermoplastic elastomer. Surrounding the innermost layer is a tie layer 15 of a thermoset material. The reinforcement layer 20 surrounds the tie layer 15, and the cover 25 surrounds the reinforcement layer 20. The tie layer 15 is specially formulated to promote bonding between the inner layer and cover material 25. The cover layer 25 can be made from a thermoset material which is the same as or different from the tie layer 15. The three outer layers 15, 20, 25 are manufactured from a selection of materials that, when combined as described, provide the unique advantages of retention of the shape of the hose, integrity of the structure at high temperatures, and improved long term sealing characteristics.

### Example 1

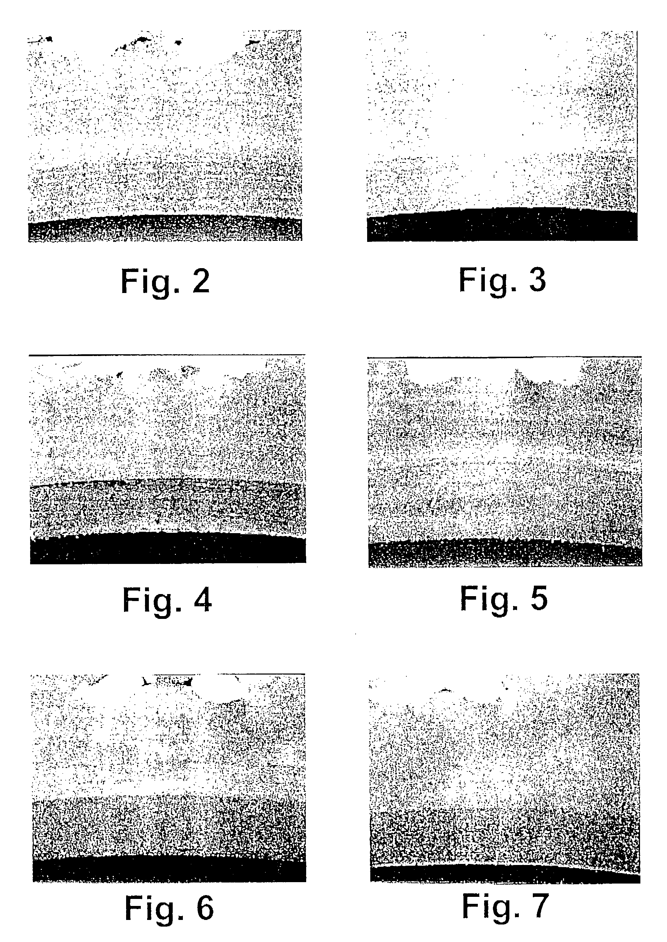

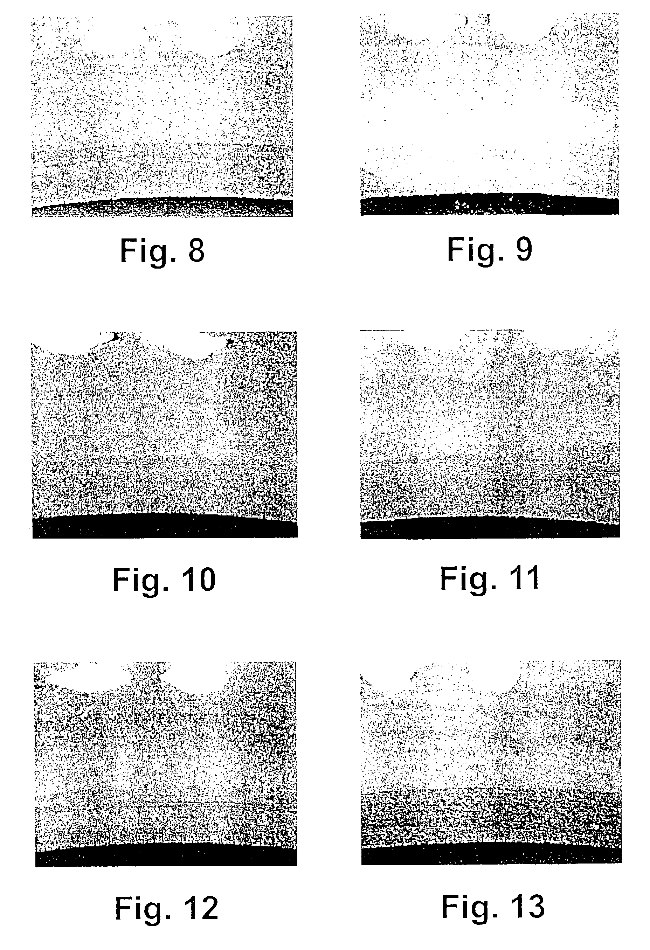

As a first example of the ECD resistance of a coolant hose according to the principles of the invention, a coolant hose was manufactured having a flexible TPV as an inner tube, an EPDM tie layer, Kevlar reinforcement and an outer EPDM cover. The TPV used was DSM Sarlink 4175, and the cover was a low cost sulfur cured non-ECD resistant EPDM rubber. Samples of the hose were tested continuously for three weeks on a Brabolyser (Gates Co.) test rig for 500 hours at 100°C with a voltage of 12V using coolants designated in FIGS. 2 to 13. According to the Brabolyser procedure, the voltage is applied to two coolant hose sections that are insulated from one another by a glass connecting piece. Each hose section is filled with a 50/50 mixture of antifreeze and water. The assembly is heated for the above length of time while 12 volts DC is placed across the cell. After testing, the hoses were cooled and cleaned. The inner surface of the hoses were then visually examined. The hoses were then sectioned at each end, 20 to 40 mm from the clip mark, and viewed under a microscope at 20X magnification. Representative portions of the section were photographed.

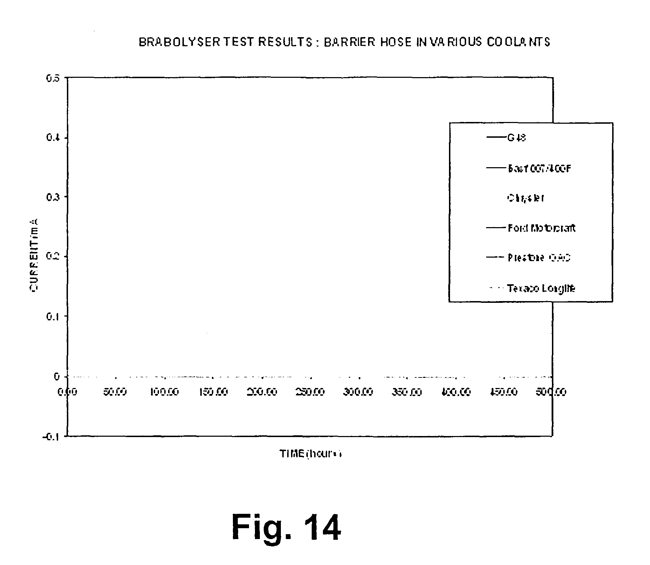

FIG. 14 shows current logged during the test period. No current was observed. Therefore, the TPV did not conduct electricity in the tested environment. Sections of the hose are shown in FIGS. 2 to 13. No evidence of ECD was found for hoses tested in all coolants. It is therefore concluded that the EPDM hose having an inner Sarlink tube passed the Brabolyser test at 100°C, and at 12V for three weeks.

### Example 2

As a second example of the ECD-resistant coolant hose according to the invention, dumbbells were cut from 2mm thick tensile sheets of two TPVs, Santoprene 121-79, and 121-65. Each of these Santoprene materials comprise a polypropylene resin component and an EPDM rubber that have been subject to dynamic vulcanization. The samples were elongated 50%, and tested continuously for 168 hours under the DSM test at 80°C using Ford motor coolant. One sample was subjected to a voltage of 10V, and the other was tested at 0V. After testing, the samples were cleaned and observed under a microscope for evidence of damage.

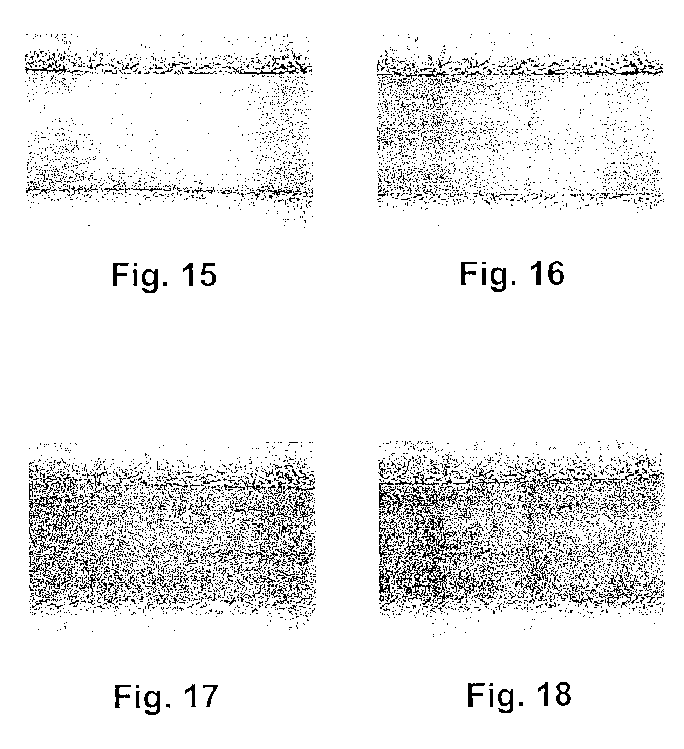

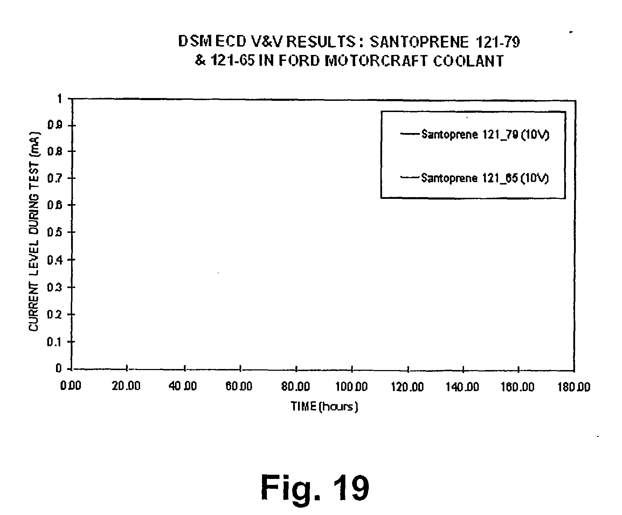

Photographs of the surface of the samples were taken at 6.3X magnification, and are shown in FIGS. 15 to 18. No evidence of damage on the surfaces of the tested samples existed following the above procedures. Also, the samples returned to their non-elongated position on release of the 50% elongation. FIG. 19 shows that no current was observed during the above procedures. It was therefor concluded that the TPV did not conduct electricity during the test. The condition of the samples after testing is shown in tabular form in Table 1 below.

**Table 1:**

| Physical properties of samples after testing | | | | |
|---|---|---|---|---|
| SAMPLE | Santop | 121-79 | Santop | 121-65 |
| | (OV) | 10V | (OV) | 10V |
| Crack rating | 0 | 0 | 0 | 0 |
| Tensile Strength (Mpa) | 8.6 | 8.19 | 6.6 | 6.3 |
| M100(MPa) | 4.9 | 4.7 | 2.6 | 2.6 |
| M300 (MPa) | 7.1 | 6.6 | 3.6 | 3.7 |
| E@B (%) | 391.9 | 407.4 | 664.8 | 587.5 |
| | | | | |
| Retention Tensile St % | | 95 | | 95.5 |
| Retention M100% | | 95.4 | | 99.2 |
| Retention M300% | | 95.1 | | 102.6 |
| Retention E@B % | | 104 | | 88.4 |

This data shows that the tested TPV has the required resistance to the electrochemical degradation that is likely to occur in an automotive engine coolant hose.

Reasonable variation and modification are possible within the spirit of the foregoing specification and drawings without departing from the scope of the invention.

## Claims

1. An automotive engine coolant hose having an innermost layer made of a thermoplastic elastomer selected from the group consisting of styrene block copolymers, elastomeric alloys other than melt-processible rubbers, polyolefinic blend, polyurethanes, copolyesters and compositions of hard polyamides having soft segments of at least one of an aliphatic polyether or polyester; a reinforcement layer surrounding the innermost layer; and a cover layer of a thermoset material surrounding the reinforcement layer.

2. An automotive coolant hose according to claim 1 and further comprising a tie layer of a thermoset material between the innermost layer and the reinforcement layer.

3. An automotive coolant hose according to claim 2 wherein the tie layer is an EPDM rubber.

4. An automotive coolant hose according to claims 2 or 3 wherein the thickness of the tie layer is in the range of 0.0 to 0.1 inches.

5. An automotive coolant hose according to claims 2 or 3 wherein the thickness of the tie layer is in the range of 0.040 to 0.080 inches.

6. An automotive coolant hose according to claims 2 or 3 wherein the thickness of the tie layer is about 0.065 inches.

7. An automotive coolant hose according to any of claims 2-6 wherein the tie layer is applied by extrusion.

8. An automotive coolant hose according to any of claims 2-7 wherein the composition of the tie layer and the cover layer comprise the same thermoset compound.

9. An automotive coolant hose according to any of claims 1-8 wherein the thermoplastic elastomer is a melt-processible thermoplastic olefin.

10. An automotive coolant hose according to any of claims 1-8 wherein the thermoplastic elastomer is an elastomeric alloy other than a melt-processible rubber.

11. An automotive coolant hose according to any of claims 1-8 wherein the thermoplastic elastomer is a thermoplastic vulcanizate.

12. An automotive coolant hose according to any of claims 1-11 wherein the inner layer is formed by extruding the layer as a tube.

13. An automotive coolant hose according to any of claims 1-12 wherein the thickness of the inner layer is in the range of 0.003 inches to 0.065 inches.

14. An automotive coolant hose according to any of claims 1-12 wherein the thickness of the inner layer is in the range of 0.010 to 0.040 inches.

15. An automotive coolant hose according to any of claims 1-12 wherein the thickness of the inner layer is about 0.025 inches.

16. An automotive coolant hose according to any of claims 1-15 wherein the reinforcement layer is formed from synthetic fibers or metal fibers which are braided, knit or spirally wound.

17. An automotive coolant hose according to any of claims 1-16 wherein the cover layer is an EPDM rubber material.

18. An automotive coolant hose according to any of claims 1-17 wherein the cover layer is formed by crosshead or co-extrusion over the tie layer after the tie layer and the reinforcement layer have been applied to the inner layer.

19. An automotive coolant hose according to any of claims 1-18 wherein the thickness of the cover layer is in the range of 0.020 inches to 0.100 inches.

20. An automotive coolant hose according to any of claims 1-18 wherein the thickness of the cover layer is in the range of 0.040 to 0.080 inches.

21. An automobile cooling system for an internal combustion engine comprising a radiator and coolant hoses connected to the radiator and adapted to be connected to an automobile engine to cool the same, the coolant hoses constructed according to any of claims 1-20.
